# EUROPÄISCHE PATENTSCHRIFT

(11) **EP 2 375 047 B1**
(45) Veröffentlichungstag und Bekanntmachung des Hinweises auf die Patenterteilung: **21.02.2018**
(21) Anmeldenummer: 11162085.2
(22) Anmeldetag: 12.04.2011
(51) Int. Cl.: F02B 29/04, F28D 7/16, B01D 53/00, B01D 53/92, F02M 26/05, F02M 26/50, F02M 26/28, F02M 26/35, F28F 19/00, F02M 26/32

(54) **Vorrichtung zur Reduzierung von korrosiven Bestandteilen in einem Abgaskondensat eines Verbrennungsmotors**
Device for reducing corrosive components in a waste gas condensate of a combustion engine
Dispositif de réduction de composants corrosifs dans un condensat de gaz d'échappement d'un moteur à combustion interne

(30) Priorität: 12.04.2010 DE 102010003864
(43) Veröffentlichungstag der Anmeldung: 12.10.2011
(73) Patentinhaber: MAHLE Behr GmbH & Co. KG, 70469 Stuttgart (DE)
(72) Erfinder: Irmler, Klaus, 72072, Tübingen (DE); Ruckwied, Jens, 70176 Stuttgart (DE); Knödler, Wolfgang, 71332, Waiblingen (DE); Werner, Jörg, 71706 Markgröningen-Unterriexingen (DE)
(74) Vertreter: Grauel, Andreas

(56) Entgegenhaltungen:
- EP-A1- 2 168 661
- WO-A1-02/22239
- WO-A1-2008/058734
- WO-A2-2004/011784
- WO-A2-2007/104580
- DE-A1-102008 045 479
- JP-A- 2002 371 921

## Beschreibung

Die Erfindung betrifft eine Vorrichtung zur Reduzierung von korrosiven Bestandteilen in einem Abgaskondensat eines Verbrennungsmotors, bei welcher das Abgas des Verbrennungsmotors über eine Abgasrückführung, bestehend aus einem Abgaskühler und mindestens einer Abgasrückführleitung, auf den Verbrennungsmotor zurückgeführt ist.

In abgasführenden Bauteilen, insbesondere Abgaskühlern und Ladeluftkühlern bei Niederdruckabgasrückführungen, entsteht bei Unterschreitung des Taupunktes korrosives Abgaskondensat. Dieses korrosive Abgaskondensat kann in den nachgelagerten Komponenten und dem Verbrennungsmotor selbst zu einem Korrosionsangriff führen, was zur Folge hat, dass die Komponenten oder der Verbrennungsmotor, die mit dem korrosiven Abgaskondensat in Berührung kommen, beschädigt werden oder gar ganz ausfallen.

Kommt es zur Kondensatbildung, entstehen starke Säuren, die einen korrosiven Angriff der metallischen Oberflächen der Abgasrückführung bzw. des Verbrennungsmotors bewirken.

Aus der EP 2 161 438 A2 ist ein System zur Rückführung von Abgas einer Verbrennungskraftmaschine bekannt, welches eine Abscheideeinheit aufweist. Mit Hilfe dieser Abscheideeinheit wird ein Kondensat abgeschieden und das aus dem Abgas abgeschiedene Kondensat wird teilweise über eine Entsorgungsleitung in ein Niederdruckteil des Abgassystems eingeleitet. Weiterhin ist eine Dosiereinheit vorhanden, die eine definierbare Menge des Kondensates oder zumindest der Komponenten des Kondensates in einen Luftzufuhreinlasskanal des Verbrennungszylinders des Verbrennungsmotors einbringt.

Aus der DE 10 2005 047 840 A1 ist ein luftgekühlter Abgaswärmeübertrager bekannt, bei welchem von dem Abgas durchströmten Kanäle als Rohre ausgebildet sind. Zwischen diesen Kanälen sind Rippen zur Luftkühlung angeordnet, die aus Edelstahl gefertigt und somit gegen Korrosion geschützt sind.

Aus der DE 10 2005 059 717 A1 ist eine Vorrichtung zum Austausch von Wärme für säurehaltige Gase bekannt. Diese Vorrichtung enthält einen Wärmetauscher mit mindestens einem Strömungskanal für das säurehaltige Gas, der im Wesentlichen aus Aluminium und/oder einer Aluminiumlegierung besteht, und derart ausgeführt ist, dass der Strömungskanal vor einer tiefengängigen Korrosion durch das säurehaltige Gas geschützt wird, wodurch ein gleichmäßiger Bauteileschutz erreicht wird.

WO 2004/011784 A2 betrifft eine Vorrichtung zur Reduzierung von korrosiven Bestandteilen in einem Abgaskondensat eines Verbrennungsmotors.

Es ist Aufgabe der Erfindung, eine Vorrichtung zur Reduzierung von korrosiven Bestandteilen in einem Abgaskondensat eines Verbrennungsmotors anzugeben, bei welcher die Komponenten der Abgasrückführung und/oder der Ansaugluftkomponenten und der Verbrennungsmotor vor korrosiven Angriffen des Abgaskondensats geschützt werden und trotzdem eine einfache Herstellung möglich ist.

Erfindungsgemäß wird die Aufgabe dadurch gelöst, dass die Abgasrückführung mindestens eine Neutralisationseinheit zur Neutralisation der korrosiven Bestandteile des Abgaskondensats aufweist, welche mit mindestens einem stromabwärts angeordneten Bauteil verbunden ist, welches von dem von korrosiven Bestandteilen annähernd befreiten Abgas durchströmt wird. Das hat den Vorteil, dass durch die Neutralisationseinheit eine stetige und gezielte Neutralisation der korrosiven Komponenten des Abgaskondensats erzielt wird, wodurch die stromabwärts liegenden Bauteile der Abgasrückführung, der Ansaugluft-Komponenten und/oder der Verbrennungsmotor selbst vor Korrosion und mechanischem Abrieb durch die korrosiven Partikel geschützt sind. Gemäß der Erfindung weist die Neutralisationseinheit in einem, von dem Abgas durchströmten Bereich eine Oberfläche auf, die aus einem mit den korrosiven Bestandteilen des Abgaskondensats chemisch reagierenden Material besteht. Durch das chemisch reagierende Material werden die sauren Bestandteile des Abgaskondensates chemisch gebunden und aus dem Bereich des chemisch reagierenden Materials abgeführt. Diese chemische Reaktion der korrosiven Bestandteile mit dem Material erfolgt dabei direkt an dem Ort, an welchem das Kondensat entsteht beziehungsweise möglichst direkt im Anschluss daran. Die sich dabei bildenden Reaktionsprodukte setzen sich nicht auf der Oberfläche der Neutralisationseinheit fest und ermöglichen somit dem nachfolgenden Abgaskondensat den Zutritt zu der reaktiven Oberfläche der Neutralisationseinheit.

In einer anderen Ausgestaltung ist die Neutralisationseinheit vollständig aus dem mit den korrosiven Bestandteilen des Abgaskondensats chemisch reagierenden Material hergestellt. Die durch die chemische Reaktion gebildeten Reaktionsprodukte sind im flüssigkeitshaltigen Kondensat leicht löslich und werden somit einfach von der Oberfläche abtransportiert. Die reaktive Oberfläche wird somit schnell für das nachfolgende, mit korrosiven Bestandteilen behaftete Abgaskondensat freigegeben. Durch den stetigen Abtrag der reaktiven Oberfläche kann auf die Bildung einer Schutzschicht verzichtet werden.

Gemäß der Erfindung ist die mit dem Abgas in Berührung stehende und aus dem chemisch reagierenden Material gebildete Oberfläche der Neutralisationseinheit feinkörnig ausgebildet und weist insbesondere eine Korngröße von weniger als 50 µm auf. Die geringe Partikelgröße führt insbesondere zu einer geringeren Schädigungswahrscheinlichkeit an den in Strömungsrichtung nachfolgenden Bauteilen. Auf Grund des günstigeren Oberflächen zu Volumen-Verhältnis erfolgt zudem ein einfacheres An- bzw. Auflösen der Reaktionsprodukte im Abgaskondensat, wobei die Korrosionsprodukte nicht mehr als fester Bestandteil vorliegen.

Gemäß der Erfindung ist die feinkörnige Oberfläche der Neutralisationseinheit auf einen Werkstoff mit grober Kornstruktur aufgetragen. Durch die Verwendung eines grobporigen Materials, wie beispielsweise Guss, und das Auftragen der feinkörnigen Oberfläche auf dieses grobkörnige Material, lassen sich billige Werkstoffe als Grundwerkstoff für die Neutralisationseinheit verwenden, was zu einer kostengünstigen Realisierung führt.

Neben der Neutralisation des Abgases beziehungsweise der in dem Abgaskondensat enthaltenen korrosiven Bestandteile sind die beschriebenen Werkstoffeigenschaften zur Erzeugung von sehr kleinen Partikeln eine wesentliche Funktionseigenschaft der Neutralisationseinheit.

In einer besonders günstigen Variante ist das Material ein metallischer Werkstoff, vorzugsweise Aluminium und dessen Legierungen und/oder Zink und dessen Legierungen. Solche Legierungen weisen eine leichte Löslichkeit der Reaktionsprodukte im Abgaskondensat auf, was insbesondere durch Verwendung von Legierungskombinationen, wie Zinklegierungen, erreicht wird.

In einer Variante besteht das Material aus einem Aluminium-Knetwerkstoff oder dessen Legierungen.
Vorteilhafter Weise besteht das chemisch reagierende Material aus Aluminium mit einem zulegierten Zinkanteil. Durch den zulegierten Zinkanteil wird die Oberfläche der Neutralisationseinheit, welche mit dem Abgaskondensat in Kontakt steht, im Vergleich zu einer reinen Aluminiumoberfläche unedler und somit gegenüber dem Medium reaktionsfreudiger. Durch Zulegieren von Zink lässt sich die Elektropotenzialdifferenz zwischen unedler Oberfläche und dem Kern auf größer 70mV steigern. Im Vergleich dazu, zeigt ein Rohrwerkstoff mit zinkfreier Lotplattierung und dem oben genannten Aluminium-Kernwerkstoff eine Elektropotenzialdifferenz von kleiner 30 mV. Je höher die Elektropotentialdifferenz zwischen Oberfläche und Kern, umso bevorzugter und gleichmäßiger erfolgt die Neutralisation an der Oberfläche. Hierdurch wird außerdem tiefengängige Korrosion verhindert.

In einer Weiterbildung ist die Neutralisationseinheit durch mindestens einen Teil des Abgaskühlers und/oder eines Ladeluftkühlers und/oder der Abgasrückführleitung gebildet. Somit können an sich in der Abgasrückführung enthaltene Bauteile als Neutralisationseinheit genutzt werden. Diese Bauteile bestehen dabei selbst vollständig aus dem chemisch reagierenden Material oder nur die Teile davon, welche mit dem Abgaskondensat in Berührung kommen. Alternativ können diese Teile auch nur mit dem entsprechenden chemisch reagierenden Material beschichtet sein. Dadurch lässt sich eine besonders kostengünstige Lösung realisieren.

Vorteilhafterweise weist der von dem Abgas durchströmte Bereich der Neutralisationseinheit bezogen auf den frei strömenden Querschnitt einen kleinen hydraulischen Durchmesser von vorzugsweise 200 mm, insbesondere < 20 mm, im Besonderen < 6 mm auf. Der hydraulische Durchmesser stellt dabei ein Maß dafür dar, wie viel Oberfläche im Verhältnis zum Querschnitt des verwendeten Bauteiles genutzt wird. Je kleiner der hydraulische Durchmesser ist, umso mehr Oberfläche steht zur Reaktion des Abgaskondensates mit dem chemisch reagierenden Material zur Verfügung. Um eine nachhaltige Reduzierung der korrosiven Bestandteile des Abgaskondensates zu erreichen, muss also eine möglichst große Oberfläche zur Verfügung stehen.

Vorteilhafterweise weist der von dem Abgas durchströmte Bereich der Neutralisationseinheit eine große reaktive Oberfläche auf, welche vorzugsweise in Form von Rippen, Stegen oder Winglets realisiert ist.

Zur Entfernung der Reaktionsprodukte aus dem Bereich des chemisch reagierenden Materials ist es notwendig, dass das Abgaskondensat eine möglichst hohe Strömungsgeschwindigkeit aufweist. Zur Realisierung eines hohen Geschwindigkeitsgradienten ist der von dem Abgas durchströmte Bereich der Neutralisationseinheit so gestaltet, dass das durchströmende Abgas Reynoldszahlen von > 2300, insbesondere durch das Einbringen von Turbulenzeinlagen, erreicht. Damit die Reaktionsprodukte von dem reagierenden Abgaskondensat abgeführt werden können, haben diese ein möglichst geringes Gewicht und eine geringe Oberfläche.

In einer Weiterbildung ist die Neutralisationseinheit austauschbar gestaltet. Dies ist insbesondere immer dann von Vorteil, wenn die Neutralisationseinheit nur eine Oberfläche besitzt, die eine Beschichtung mit dem chemisch reagierenden Material aufweist. Da diese Beschichtung mit der Zeit aufgrund einer begrenzten Schichtdicke verbraucht wird, bietet es sich an, nach vollständigem Abbau dieser Oberfläche eine neue Neutralisationseinheit einzubauen. Dadurch wird gewährleistet, dass der Effekt der Neutralisation der korrosiven Bestandteile im Abgaskondensat kontinuierlich beibehalten wird.

In einer vorteilhaften Ausgestaltung weist die Neutralisationseinheit mindestens eine Schraub- und/oder Steckverbindung zur austauschbaren Verankerung in der Abgasrückführung auf. Durch solche gängigen Schraub- und/oder Steckverbindungen ist ein leichter Austausch der Neutralisationseinheit in der bestehenden Abgasrückführung möglich.

Die Erfindung lässt zahlreiche Ausführungsformen zu. Einige davon sollen anhand der in der Zeichnung dargestellten Figuren näher erläutert werden. Es zeigt:
- Fig. 1:: eine Hochdruckabgasrückführung
- Fig. 2:: eine gemischte Abgasrückführung
- Fig. 3:: eine Niederdruckabgasrückführung
- Fig. 4:: eine luftgekühlte Abgasneutralisationseinheit
- Fig. 5:: eine mit Kühlwasser gekühlte Abgasneutralisationseinheit
- Fig. 6:: verschiedene Querschnitte durch einen Strömungskanal einer Abgasneutralisationseinheit nach Fig. 2

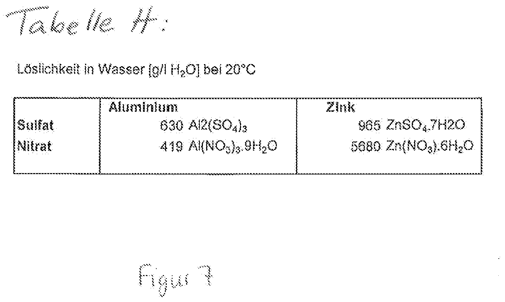

- Fig. 7:: Tabelle H

Gleiche Merkmale sind mit gleichen Bezugszeichen gekennzeichnet.

Abgaskühler werden bei heutigen Fahrzeugen, insbesondere Nutzfahrzeugen, im Rahmen eines Abgasrückführsystems (AGR-System) zur Kühlung von zurückgeführten Abgasen eingesetzt. Die Abgasrückführung basiert auf gesetzlichen Bestimmungen zur Reduktion von Schadstoffen (insbesondere NOₓ) in den Abgasen des Verbrennungsmotors.

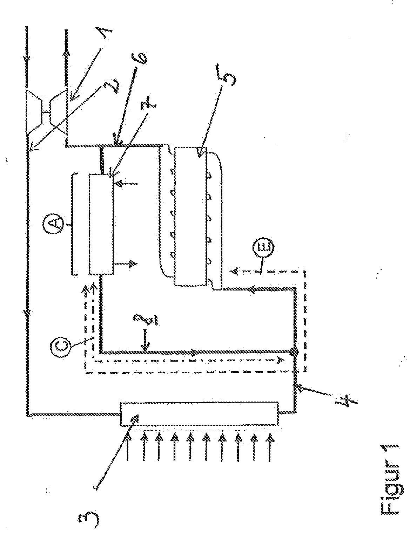

In den Figuren 1 bis 3 ist ein Abgasrückführungssystem für einen Dieselmotor dargestellt, welcher von einem Turbolader angetrieben wird. Der Turbolader 1 besteht aus zwei Strömungsmaschinen, einer Turbine und einem Verdichter. Die Turbine nutzt die im Abgas enthaltene Energie zum Antrieb des Verdichters, der Frischluft ansaugt und vorverdichtete Luft in die Zylinder des Dieselmotors 5 drückt. Der Turbolader 1 ist energetisch nur durch den Luft- und Abgasmassenstrom mit dem Dieselmotor 5 gekoppelt.

In Figur 1 ist der Turbolader 1 über eine Ladeluftleitung 2 mit einem Ladeluftkühler 3 verbunden. Der Ladeluftkühler 3 führt über eine Ansaugleitung 4 direkt an den Dieselmotor 5. Der Dieselmotor 5 ist über eine Abgasleitung 6 wieder mit dem Turbolader 1 gekoppelt und zum anderen über einen Abzweig mit dem Abgaskühler 7 verbunden. Der Abgaskühler 7 führt über eine erste Abgasrückführleitung 8 an die Ansaugleitung 4 des Dieselmotors 5. Bei dieser Anordnung handelt es sich um eine Hochdruckabgasrückführung.

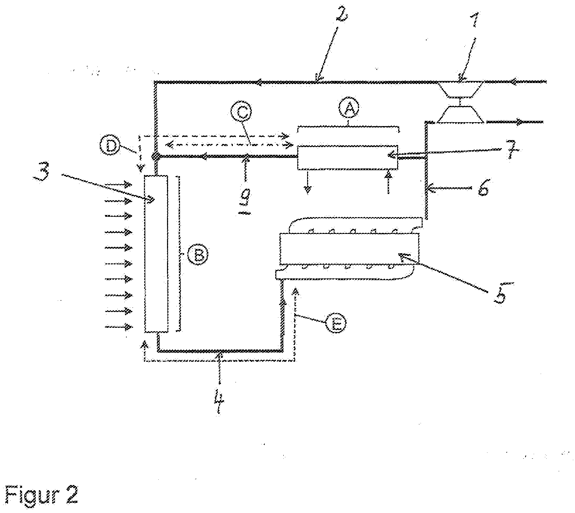

Figur 2 zeigt eine ähnliche Anordnung, welche eine gemischte Abgasrückführung darstellt. Auch in dieser Darstellung ist der Turbolader 1 über die Ladeluftleitung 2 mit dem Ladeluftkühler 3 verbunden, welcher über die Ansaugleitung 4 mit dem Dieselmotor 5 verbunden ist. Über die Abgasleitung 6 gibt der Verbrennungsmotor 5 sein Abgas an den Turbolader 1 und den Abgaskühler 7 aus. In diesem Fall ist der Abgaskühler 7 über eine zweite Abgasrückführleitung 9 mit der Ladeluftleitung 2 verbunden. Bei dieser Variante wird also das von dem Abgaskühler 7 bereitgestellte Abgaskondensat mit der Ladeluft gemeinsam auf den Ladeluftkühler 3 geführt und dort abgekühlt Dieses Gemisch aus Ladeluft und Abgaskondensat wird über die Ansaugleitung 4 dem Dieselmotor 5 zugeführt,

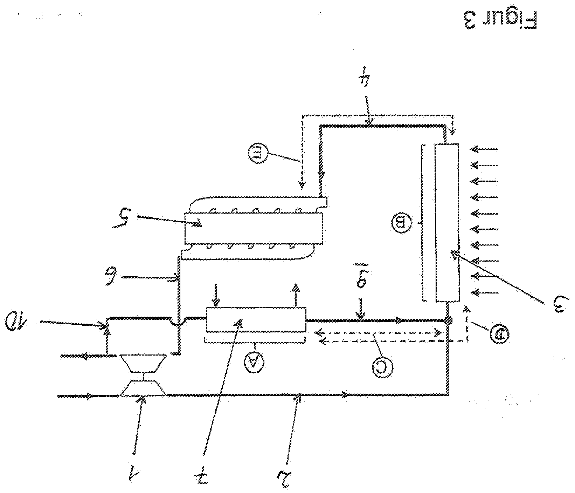

Figur 3 zeigt eine Niederdruckabgasrückführung, bei welcher ebenfalls der Turbolader 1 mit der Ladeluftleitung 2 auf den Ladeluftkühler 3 führt, welcher wiederum über die Ansaugleitung 4 mit dem Dieselmotor 5 verbunden ist. Die Abgase des Dieselmotors 5 werden über die Abgasleitung 6 dem Turbolader 1 zugeführt, welcher die Abgase an die Umgebung abgibt. Im Unterschied zu den vorhergehenden Figuren 1 und 2 ist in der Figur 3 das Abgas über die dritte Abgasrückführleitung 10 auf den Abgaskühler 7 geführt, wobei die dritte Abgasrückführleitung 10 am umgebungsseitigen Ausgang des Turboladers 1 angeschlossen ist. Auch in diesem Fall führt der Abgaskühler 7 über die zweite Abgasrückführleitung 9 die Abgase in die Ladeluftleitung 2 ein, wo sich beides vermischt und dem Luftladekühler 3 zur Abkühlung zugeführt wird.

Für alle drei erläuterten Abgasrückführungen ergeben sich zwei Möglichkeiten, eine Neutralisierungseinheit zu gestalten. Zum einen können nur Bereiche der Abgasrückführung mit einer Beschichtung versehen werden, welche aus einem mit den korrosiven Bestandteilen des Abgaskondensats chemisch reagierenden Material besteht. Somit werden für die Neutralisation geeignete Oberflächen geschaffen, welche in diesem Zusammenhang metallische Werkstoffe wie Zink und dessen Legierungen oder Aluminium und dessen Legierungen aufweisen. Üblicherweise wird dazu AA7XXX (Aluminiumlegierung mit Zinkanteilen), oder zinkhaltige Zulegierungen in den Aluminiumwerkstoffgruppen AA4XXX (Aluminiumsilizium), AA3XXX (Aluminiummangan) oder AA1XXX verwendet. Der Zink-Legierungsanteil ist dabei größer als 0,5 Gewichtsprozent, vorzugsweise größer als 1% zu wählen.
Durch Zulegieren von Zink wird die Oberfläche im Vergleich zu einer reinen Aluminium-Oberfläche unedler und somit gegenüber dem Medium reaktionsfreudiger. Die gebildeten Reaktionsprodukte sind im Medium leicht löslich und werden somit leicht von der Oberfläche fortgetragen und geben somit eine ausreichend neue reaktive Oberfläche frei. Stetiger Abtrag der reaktiven Oberfläche ohne Bildung einer Schutzschicht.
Die leichte Löslichkeit der Reaktionsprodukte im Medium wird insbesondere durch Verwendung oben genannter Legierung bzw. -kombinationen wie durch solche mit Zink erreicht.

So ist aus der Tabelle H ersichtlich, dass im schwefelsauren Abgaskondensat die Löslichkeit von Zink im Vergleich zu Aluminium um 50 % höher ist (630 g/l zu 965 g/l). Auch in wässrigen Lösungen, welche beispielsweise durch die Bildung von Hydroxiden mit OH-Gruppen entstehen, liegt die Löslichkeit von Zink signifikant über der von Aluminium mit 0,21 g/l zu 0,0015 g/l.

Um sicherzustellen, dass das Abgaskondensat möglichst vollständig neutralisiert wird, ist die reaktive Oberfläche möglichst groß zu gestalten und durch eine strömungsoptimierte Gestaltung der Abgasrückführleitungen 8, 9, 10 selber eine möglichst gleichmäßige Beaufschlagung der reaktiven Oberfläche mit dem Abgaskondensat anzustreben. In den Figuren 1 bis 3 sind die in Frage kommenden Bereiche der Abgasrückführleitungen 8, 9, 10 beziehungsweise der Ansaugleitung 4 des Dieselmotors 5 mit gestrichelten Pfeilen C, D, E gekennzeichnet.

In einer anderen Variante können aber auch der Abgaskühler 7 beziehungsweise der Ladeluftkühler 3 selbst vollständig aus dem chemisch reagierende Material hergestellt sein und somit als Neutralisationseinheit A bzw. B dienen.

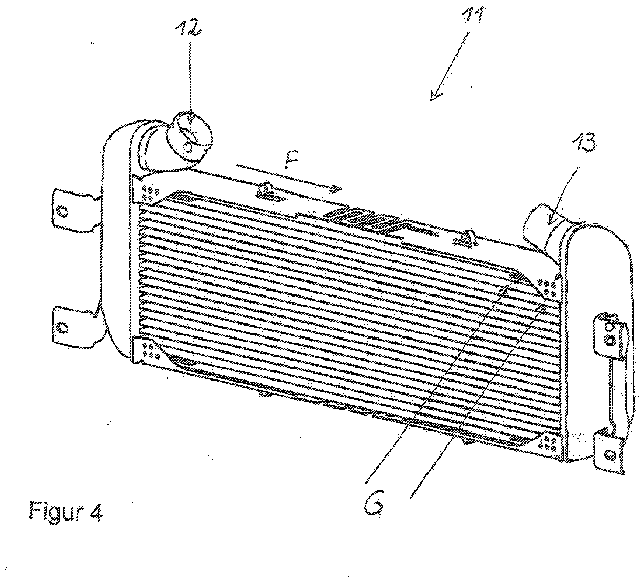

In der Figur 4 ist eine luftgekühlte Abgasneutralisationseinheit 11 in Form eines Ladeluftkühlers dargestellt. Diese luftgekühlte Abgasneutralisationseinheit 11 weist dabei einen Abgaseinlass 12 und einen Abgasauslass 13 auf. Das mit einem hohen Abgaskondensatgehalt belastete Abgas strömt dabei über den Gaseinlass 12 in die Abgasneutralisationseinheit 11 ein und wird entlang des Pfeils F durch die Abgasneutralisationseinheit 11 geführt. Sie tritt dann zum Abgasauslass 13 wieder aus der Abgasneutralisationseinheit 11 aus. Die Kühlungsluft trifft im Kreuzstrom senkrecht auf die Abgasneutralisationseinheit 11 auf, was durch die Pfeile G dargestellt ist. Eine solche Abgasneutralisationseinheit 11 ist dabei aus Aluminium oder einen der erläuterten Aluminiumlegierungen hergestellt. Sie dient zur Neutralisation der im Abgas enthaltenen korrosiven Bestandteile.
Im Falle einer gekühlten Abgasrückführung ist es vorteilhaft, die reaktive Oberfläche in Form des Abgaswärmetauschers selbst zur Verfügung zu stellen, da dadurch gewährleistet ist, dass direkt am Ort der Kondensatentstehung dieses umgehend neutralisiert wird und somit die nachfolgenden Bauteile geschützt werden,

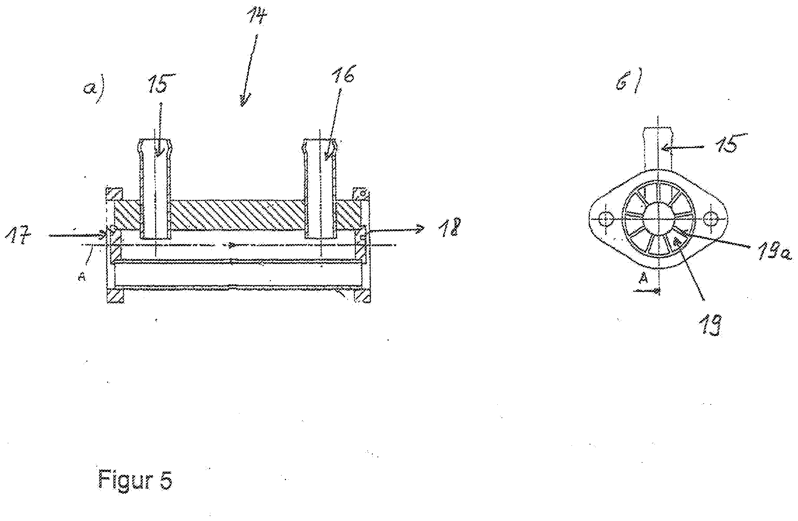

Figur 5a zeigt eine Abgasneutralisationseinheit 14, welche mit Kühlwasser gekühlt wird. Durch den Anschluss 15 strömt das Kühlwasser in die kühlwassergekühlte Abgasneutralisationseinheit 14 und bewegt sich entlang der Strömungsrichtung A innerhalb der Abgasneutralisationseinheit 14 und wird durch den Kühlwasserauslass 16 wieder aus der Abgasneutralisationseinheit 14 ausgelassen. Durch die Abgaseinleitung 17 strömt das Abgas mit hohem Abgaskondensatgehalt in die Abgasneutralisationseinheit 14 ein und wird am Abgasauslass 18 wieder aus der Abgasneutralisationseinheit 14 ausgeführt.

In der Figur 5b ist ein Querschnitt durch den Strömungskanal 19 der kühlwassergekühlten Abgasneutralisationseinheit 14 dargestellt. Dabei handelt es sich um eine sternförmige Geometrie im Durchmesser des Strömungskanals 19. Durch die sternförmig angeordneten Stege 19a wird die Oberfläche zur Reaktion des Abgaskondensates vergrößert. Im vorliegenden Fall besteht die gesamte Innenfläche des Strömungskanals einschließlich der sternförmigen Stege aus Aluminium oder Zink oder deren Legierungen.

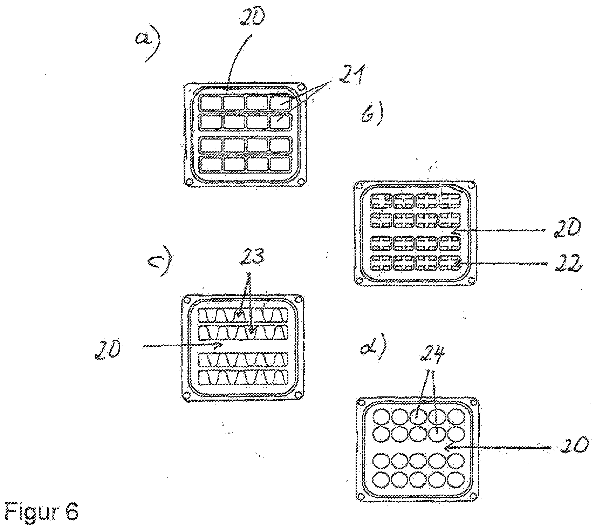

Figur 6 zeigt verschiedene Querschnitte durch einen weiteren Strömungskanal 20, der ebenfalls aus Aluminium bzw. dessen Legierungen und/oder Zink bzw. dessen Legierungen gebildet ist.

Figur 6a zeigt einen Strömungskanal 20, welcher Strangpressprofile 21 aufweist, welche jedes für sich einen rechteckförmigen Querschnitt darstellt und dadurch eine große Oberfläche bildet. Dadurch, dass mehrere solcher Strangpressprofile nebeneinanderliegend angeordnet sind, wird das Abgaskondensat stetig dem Neutralisationsprozess unterzogen. Die gebildeten Reaktionsprodukte werden durch die flüssige Lösung, welches das Abgaskondensat bildet, aus dem Reaktionsbereich abgeführt, so dass nachströmendes Abgaskondensat, welches mit den korrosiven Bestandteilen behaftet ist, wieder mit denselben Oberflächen reagieren kann.

Figur 6b zeigt so genannte Winglets 22. Dabei handelt es sich um Einprägungen, welche für eine Verwirbelung der Abgasströmung sorgen. Figur 6c zeigt Rippen 23, welche als gewalzte oder gestanzte Ausführung hergestellt werden können. Auch diese Anordnung sorgt für einen großen Oberflächenbereich in dem Strömungskanal 20. Eine besonders einfache Variante der Realisierung des Strömungskanals 20 mit einer vergrößerten Oberfläche ist in Figur 6d dargestellt, wo die Profile durch runde Rohre 24 realisiert sind. Durch geeignete Einprägungen zur Drallerzeugung kann die Oberfläche und Turbulenz dieser Rohre nochmals gesteigert werden.

Durch die stetige Neutralisation der korrosiven Bestandteile des Abgaskondensats, welches im Abgaskühler 7 bereitgestellt wird, und die geringe Partikelgröße der Reaktionsprodukte, die dadurch entstehen, dass das Abgaskondensat mit den chemisch reagierenden Materialien wie Aluminium oder einer Aluminium-Zinklegierung reagiert und dadurch sofort aus dem Reaktionsbereich abgeleitet werden können, ist ein umfassender Schutz der der Neutralisationseinheit 7 nachgeordneten Komponenten 3, 4, 8, 9,10 beziehungsweise des Dieselmotors 5 gegeben.

Damit die Reaktionsprodukte von dem reagierenden Abgaskondensat abgeführt werden können, haben diese ein möglichst geringes Gewicht und eine geringe Oberfläche. Wird eine Aluminiumlegierung als chemisch reagierendes Material zugrunde gelegt, haben die Reaktionsprodukte ein Gewicht von kleiner 50 µg. Diese geringe Größe der direkten und indirekten Reaktionsprodukte wird insbesondere dadurch erreicht, dass die Neutralisationsoberfläche der Neutralisationseinheit A, B, C, D, E möglichst homogen und feinkörnig ausgestaltet ist. Indirekte Reaktionsprodukte sind hierbei das Material, welches sich durch eine selektive Korrosion im Nachbarbereich herausgelöst hat. Die Neutralisation erfolgt gleichmäßig und kontrolliert, so dass gewährleistet ist, dass die reaktive Oberfläche der Neutralisationseinheit A, B, C, D, E über die gesamte Lebensdauer des verwendeten Produktes zur Verfügung steht, was insbesondere durch die Verwendung des sehr homogenen feinkörnigen Werkstoffes mit der bereits erläuterten Korngröße erreicht wird. Dadurch wird eine tiefengängige Korrosion zuverlässig unterbunden.

## Patentansprüche

1. Vorrichtung zur Reduzierung von korrosiven Bestandteilen in einem Abgaskondensat eines Verbrennungsmotors, bei welcher das Abgas des Verbrennungsmotors (5) über eine Abgasrückführung, bestehend aus einem Abgaskühler (7, 11, 14) und mindestens einer Abgasrückführleitung (6, 8, 9, 10) auf dem Verbrennungsmotor (5) zurückgeführt wird, **dadurch gekennzeichnet, dass** die Abgasrückführung (6, 7, 8, 9, 10) mindestens eine Neutralisationseinheit (A,B,C,D,E) zur Neutralisation der korrosiven Bestandteile des Abgaskondensats aufweist, welche mit mindestens einem stromabwärts angeordneten Bauteil (3, 5, 8, 9) verbunden ist, welches von dem von korrosiven Bestandteilen annähernd befreiten Abgas durchströmt wird, wobei die Neutralisierungseinheit (A,B,C,D,E) in einem von dem Abgas durchströmten Bereich eine Oberfläche aufweist, die aus einem mit den korrosiven Bestandteilen des Abgaskondensates chemisch reagierenden Material besteht und die mit dem Abgas in Berührung stehende und aus dem chemisch reagierenden Material gebildete Oberfläche der Neutralisationseinheit (A,B,C,D,E) feinkörnig ausgebildet ist und eine Korngröße von weniger als 50 µm aufweist, wobei die feinkörnige Oberfläche der Neutralisationseinheit (A,B,C,D,E) auf einen Werkstoff mit grober Kornstruktur aufgetragen ist.

2. Vorrichtung nach Anspruch 1, **dadurch gekennzeichnet, dass** die Neutralisationseinheit (A,B,C,D,E) vollständig aus der mit den korrosiven Bestandteilen des Abgaskondensats chemisch reagierenden Oberfläche besteht.

3. Vorrichtung nach mindestens einem der Ansprüche 1 oder 2, **dadurch gekennzeichnet, dass** das chemisch reagierende Material einen metallischen Werkstoff, vorzugsweise Aluminium und dessen Legierungen und/oder Zink und dessen Legierungen, umfasst.

4. Vorrichtung nach Anspruch 3, **dadurch gekennzeichnet, dass** das Material aus einem Aluminium-Knetwerkstoff oder dessen Legierungen besteht.

5. Vorrichtung nach Anspruch 3 oder 4, **dadurch gekennzeichnet, dass** die Oberfläche aus Aluminium mit einem zulegierten Zinkanteil besteht.

6. Vorrichtung nach mindestens einem der vorhergehenden Ansprüche, **dadurch gekennzeichnet, dass** die Neutralisationseinheit (A,B,C,D,E) durch mindestens einem Teil des Abgaskühlers (7) und/oder eines Ladeluftkühlers (3) und/oder der Abgasrückführleitung (8, 9, 10) gebildet ist.

7. Vorrichtung nach mindestens einem der vorhergehenden Ansprüche, **dadurch gekennzeichnet, dass** der von dem Abgas durchströmte Bereich der Neutralisationseinheit (A,B,C,D,E) bezogen auf den frei strömenden Querschnitt einen kleinen hydraulischen Durchmesser von vorzugsweise 200 mm, insbesondere < 20 mm, im Besonderen < 6 mm aufweist.

8. Vorrichtung nach Anspruch 7, **dadurch gekennzeichnet, dass** der von dem Abgas durchströmte Bereich der Neutralisationseinheit (A,B,C,D,E) eine große reaktive Oberfläche, vorzugsweise in Form von Rippen (21), Stegen (23) oder Winglets (22), aufweist.

9. Vorrichtung nach mindestens einem der vorhergehenden Ansprüche, **dadurch gekennzeichnet, dass** die Neutralisationseinheit (A,B,C,D,E) austauschbar gestaltet ist.

10. Vorrichtung nach einem der vorhergehenden Ansprüche 1 bis 9, **dadurch gekennzeichnet, dass** zwischen unedler Oberfläche und edlem Kern ein Elektropotentialunterschied von größer 30mV, insbesondere größer 70mV, vorliegt.

11. Vorrichtung nach einem der vorhergehenden Ansprüche 1 bis 10, **dadurch gekennzeichnet, dass** die Oberfläche eine Löslichkeit in schwefelsaurem Medium von größer 600g/l, vorzugsweise größer 900g/l und/oder eine Löslichkeit in wässrigen Lösungen von größer 0.001g/l, insbesondere größer 0.2 g/l, aufweist.

## Claims

1. A device for reducing corrosive constituents in an exhaust gas condensate of an internal combustion engine, in which the exhaust gas of the internal combustion engine (5) is recirculated to the internal combustion engine (5) via an exhaust gas recirculation system, consisting of an exhaust gas cooler (7, 11, 14) and at least one exhaust gas recirculation line (6, 8, 9, 10), **characterised in that** the exhaust gas recirculation system (6, 7, 8, 9, 10) has at least one neutralisation unit (A, B, C, D, E) for neutralising the corrosive constituents of the exhaust gas condensate, which unit is connected to at least one component (3, 5, 8, 9) arranged downstream, through which the exhaust gas, which has been freed of nearly all corrosive constituents, flows, wherein the neutralisation unit (A, B, C, D, E), in a region through which the exhaust gas flows, has a surface which consists of a material that reacts chemically with the corrosive constituents of the exhaust gas condensate and the surface of the neutralisation unit (A, B, C, D, E) which is in contact with the exhaust gas and is formed from the chemically reactive material is embodied as fine-grained and has a particle size of less than 50 pm, wherein the fine-grained surface of the neutralisation unit (A, B, C, D, E) is applied to a material having a coarse grain structure.

2. The device according to claim 1, **characterised in that** the neutralisation unit (A, B, C, D, E) consists entirely of the surface that reacts chemically with the corrosive constituents of the exhaust gas condensate.

3. The device according to at least one of claims 1 or 2, **characterised in that** the chemically reactive material comprises a metallic material, preferably aluminium and alloys thereof and/or zinc and alloys thereof.

4. The device according to claim 3, **characterised in that** the material consists of a wrought aluminium or alloys thereof.

5. The device according to claim 3 or 4, **characterised in that** the surface consists of aluminium alloyed with a zinc portion.

6. The device according to at least one of the preceding claims, **characterised in that** the neutralisation unit (A, B, C, D, E) is formed by at least a part of the exhaust gas cooler (7) and/or a charge-air cooler (3) and/or the exhaust gas recirculation line (8, 9, 10).

7. The device according to at least one of the preceding claims, **characterised in that** the region of the neutralisation unit (A, B, C, D, E) through which exhaust gas flows has a small hydraulic diameter of preferably 200 mm, especially < 20 mm, in particular < 6 mm, as compared with the cross-section through which gas flows freely.

8. The device according to claim 7, **characterised in that** the region of the neutralisation unit (A, B, C, D, E) through which exhaust gas flows has a large reactive surface, preferably in the form of ribs (21), lands (23) or winglets (22).

9. The device according to at least one of the preceding claims, **characterised in that** the neutralisation unit (A, B, C, D, E) is embodied as replaceable.

10. The device according to one of the preceding claims 1 to 9, **characterised in that** there is an electric potential difference between the less noble surface and the noble core of more than 30 mV, in particular more than 70 mV.

11. The device according to one of the preceding claims 1 to 10, **characterised in that** the surface has a solubility in medium containing sulfuric acid of more than 600 g/l, preferably more than 900 g/l, and/or a solubility in aqueous solutions of more than 0.001 g/l, in particular more than 0.2 g/l.

## Revendications

1. Dispositif de réduction de constituants corrosifs dans un condensat de gaz d'échappement d'un moteur à combustion interne, dispositif dans lequel les gaz d'échappement du moteur à combustion interne (5) sont renvoyés au moteur à combustion interne (5), par un recyclage des gaz d'échappement se composant d'un refroidisseur des gaz d'échappement (7, 11, 14) et d'au moins une conduite de recyclage des gaz d'échappement (6, 8, 9, 10), **caractérisé en ce que** le recyclage des gaz d'échappement (6, 7, 8, 9, 10) présente au moins une unité de neutralisation (A, B, C, D, E) servant à la neutralisation des constituants corrosifs du condensat de gaz d'échappement, unité de neutralisation qui est reliée au moins à un composant (3, 5, 8, 9) disposé en aval, composant qui est traversé par les gaz d'échappement presque exempts de constituants corrosifs, où l'unité de neutralisation (A, B, C, D, E) présente, dans une zone traversée par les gaz d'échappement, une surface qui se compose d'une matière réagissant chimiquement avec les constituants corrosifs du condensat de gaz d'échappement, et la surface de l'unité de neutralisation (A, B, C, D, E), se trouvant en contact avec les gaz d'échappement et formée par la matière réagissant chimiquement, est configurée à grains fins et présente une granulométrie de moins de 50 pm, où la surface - à grains fins - de l'unité de neutralisation (A, B, C, D, E) est appliquée sur un matériau ayant une structure granulaire grossière.

2. Dispositif selon la revendication 1, **caractérisé en ce que** l'unité de neutralisation (A, B, C, D, E) se compose complètement de la surface réagissant chimiquement avec les constituants corrosifs du condensat de gaz d'échappement.

3. Dispositif selon au moins l'une des revendications 1 ou 2, **caractérisé en ce que** la matière réagissant chimiquement comprend un matériau métallique, de préférence de l'aluminium et ses alliages, et / ou du zinc et ses alliages.

4. Dispositif selon la revendication 3, **caractérisé en ce que** la matière se compose d'un matériau de corroyage à base d'aluminium ou de ses alliages.

5. Dispositif selon la revendication 3 ou 4, **caractérisé en ce que** la surface se compose d'aluminium comprenant une proportion de zinc ajoutée par alliage.

6. Dispositif selon au moins l'une quelconque des revendications précédentes, **caractérisé en ce que** l'unité de neutralisation (A, B, C, D, E) est formée par au moins une partie du refroidisseur de gaz d'échappement (7) et / ou d'un refroidisseur d'air de suralimentation (3) et / ou de la conduite de recyclage des gaz d'échappement (8, 9, 10).

7. Dispositif selon au moins l'une quelconque des revendications précédentes, **caractérisé en ce que** la zone de l'unité de neutralisation (A, B, C, D, E), traversée par les gaz d'échappement, présente, par rapport à la section d'écoulement libre, un petit diamètre hydraulique de préférence égal à 200 mm, en particulier < 20 mm, en particulier < 6 mm.

8. Dispositif selon la revendication 7, **caractérisé en ce que** la zone de l'unité de neutralisation (A, B, C, D, E), traversée par les gaz d'échappement, présente une surface réactive importante, de préférence sous la forme d'ailettes (21), de barrettes (23) ou de winglets (22).

9. Dispositif selon au moins l'une quelconque des revendications précédentes, **caractérisé en ce que** l'unité de neutralisation (A, B, C, D, E) est configurée en étant interchangeable.

10. Dispositif selon l'une quelconque des revendications précédentes 1 à 9, **caractérisé en ce qu'**il existe, entre une surface commune et une âme noble, une différence de potentiel électrique supérieure à 30 mV, en particulier supérieure à 70 mV.

11. Dispositif selon l'une quelconque des revendications précédentes 1 à 10, **caractérisé en ce que** la surface présente une solubilité dans un milieu sulfurique, supérieure à 600 g/l, de préférence supérieure à 900 g/l, et / ou une solubilité dans des solutions aqueuses, supérieure à 0,001 g/l, en particulier supérieure à 0,2 g/l.
